# EUROPEAN PATENT SPECIFICATION

(11) **EP 0 713 082 B1**
(45) Date of publication and mention of the grant of the patent: **02.01.2002**
(21) Application number: 95307913.4
(22) Date of filing: 06.11.1995
(51) Int. Cl.: G01J 3/02, G01N 21/55

(54) **Optical module for a spectrometer**
Optikmodul für ein Spektrometer
Module optique pour un spectromètre

(30) Priority: 17.11.1994 GB 9423186
(43) Date of publication of application: 22.05.1996
(60) Divisional application: 00109941.5
(73) Proprietor: FORD MOTOR COMPANY LIMITED, Brentwood Essex (GB); Ford-Werke Aktiengesellschaft, 50735 Köln (DE); FORD FRANCE S.A., 92506 Rueil-Malmaison Cédex (FR); Ford Motor Company, Dearborn Michigan 48126 (US)
(72) Inventor: Amner, John Arthur, Rochford, Essex, SS4 1SR (GB); Mucci, Peter Edmund Rueben, Durley, Southampton (GB); Whyard, Dennis Edward, Fareham, Hants, PO14 4JZ (GB)
(74) Representative: Messulam, Alec Moses

(56) References cited:
- GB-A- 2 288 461
- US-A- 4 657 390
- US-A- 4 784 488
- US-A- 5 106 196
- US-A- 5 262 845

## Description

The present invention relates to an optical relay (also sometimes called an optical cell) for a spectrometer, particularly for an infrared spectrometer for measuring reflectance spectra of sample plastics materials, components or assemblies.

It is desirable to be able to distinguish between different plastics materials, for example in order to separate them into separate materials categories prior to recycling some or all of them. PCT application number GB 93/02244 discloses a method and apparatus for separating plastics materials involving scanning a sample surface with infrared radiation and collecting an output spectrum of specularly reflected radiation. The prior art instrument works effectively, but it requires some samples to be cleaned before taking a spectrum, and it requires that a sample have a substantially flat surface which is precisely positioned with respect to the instrument. Thus some samples, for example a sample with a curved surface, or a sample which is remote from the instrument, may not reflect infrared radiation back to the detector of the instrument.

In patent document US 5106196, a specular reflection accessory for spectroscopy is described where the angle of incidence can be adjusted without changing the focal point. In patent document US 4657390, a spectrometer system is disclosed in which the sample containing chamber is separately constructed.

According to the present invention there is provided an optical relay for use between the source and the detector of a spectrometer, the relay including one or more reflecting surfaces for directing a beam of infrared radiation from the source and through a window to a point outside the relay at which a sample surface can be located, and one or more further reflective surfaces for receiving specular reflection from the sample surface and for directing the specular reflection to the detector, characterised in that in use the angle between the beam which is incident on the sample surface, and the beam reflected from the sample surface, is substantially 12 degrees or less.

By limiting the angle between incident and reflected light to substantially 12 degrees or less, a reflectance spectrum may be obtained for a sample, even if the sample surface is not planar and/or is located to one side or the other of the focus position. This allows spectra to be readily obtained for differently shaped samples, for example plastics components from a motor vehicle, and/or for a sample which is some distance away from the relay, for example a sample on a moving conveyor belt passing the spectrometer.

In a particularly preferred embodiment, the angle is about 5 degrees.

The reflecting surfaces may be carried by a baseplate slideably mountable in the spectrometer so as to allow easy mounting and demounting of the relay in the spectrometer. This allows the spectrometer to be readily used for other applications, instead of being a dedicated piece of equipment.

The relay may include a second set of reflecting surfaces for directing a beam of infrared radiation from the source, to a sample location, from the sample as diffuse reflection and to the detector, the first and second sets of reflecting surfaces being alternately positionable between the source and the detector of a spectrometer.

This possibility allows the same relay to be used both for taking specular reflectance spectra and diffuse reflectance spectra. Spectroscopists know that spectra obtained through specular reflectance are only suitable for certain categories of sample, and diffuse reflectance has to be used for many other sample forms, in particular when the sample is particulate in nature. Particulate samples are often collected by rubbing a plastics surface with silicon carbide paper. Particles of the surface are then retained on the paper, and the paper with the retained particles can then be mounted in the spectrometer. The spectrometer is capable of ignoring the silicon carbide particles and just analysing the retained particles.

It is also within the scope of the invention to add to any optical relay which will receive specular reflection additional features to also work with diffuse reflectance spectra, so that the relay can be easily switched between the two. Accordingly, the invention also provides an optical relay for use between the source and the detector of a spectrometer, the relay having a housing containing a first set of reflecting surfaces for directing a beam of infrared radiation from the source to a point outside the relay at which a sample surface can be located and for redirecting the beam from the sample surface as a specular reflection to the detector, and a second set of reflecting surfaces for directing a beam of infrared radiation from the source, to a sample location, from the sample as diffuse reflection and to the detector, the first and second sets of reflecting surfaces being alternately positionable between the source and the detector of a spectrometer.

The two sets of reflecting surfaces may have one pair of reflecting surfaces in common, the common set of reflecting surfaces being movable between a first position where they direct radiation into and from the first set of surfaces and a second position where they direct radiation into and from the second set of surfaces.

The relay may be adjustable between two positions, in the first of which it is set to receive and direct specular reflection to the detector, and in the second of which it is set to receive and direct diffuse reflection to the detector. In the first position, as set forth above, the angle between the beam which is incident on the sample surface, and the beam reflected from the sample surface, is less than 30 degrees. In the second position, the nominal light path will make an angle of greater than 30 degrees with the sample surface, but in view of the creation of diffuse reflectance, there will in fact be a multitude of different angles of reflectance, as is known for the production of diffuse reflectance.

Specular reflectance measurements are likely to be particularly useful if the sample is in the form of a piece of material with a flat surface (although the degree of flatness is not particularly important), while diffuse reflectance measurements are more useful when the sample is particulate in nature.

The relay may therefore have two sample positions, and either the whole of the relay, or internal parts of the relay may move to bring a sample in one or in the other of the sample positions into the desired relationship with the infrared beam from the spectrometer.

The movement is preferably accomplished using a single, external lever or other switching arrangement. The movement may be movement of those two reflecting surfaces inside the relay which receive the infrared beam from the spectrometer source and direct the beam to the spectrometer detector. The surfaces may be moved so that the beam, initially directed into and received from one sample position, is directed into and received from the other sample position.

The relay can then have two separate sets of reflecting surfaces, one for each type of reflection, with the sets having just one set of movable reflecting surfaces in common.

The relay may be incorporated in a sample interface or front end housing which is provided with sample preparation means for cutting or abrading the sample surface, and with an apertured platen adapted to be moved between a first position in which the aperture is in register with the window, and a second position in which the aperture is in register with the sample preparation means. The relay may be provided with means responsive to the location of the platen in the second position to actuate the sample preparation means, and means responsive to the location of the platen away from the second position to deactuate the sample preparation means, whereby placing the sample surface against the aperture when the platen is in the second position causes the sample preparation means to cut or abrade the sample surface.

The sample preparation means may comprise any suitable cutting or abrading means, for example one or more rotatable blades or a movable abrasive pad or strip.

In a preferred embodiment, the sample preparation means has associated with it cleaning means for removing swarf or other debris resulting from the cutting or abrasion of the sample surface. The cleaning means may comprise one or more brushes, and/or a vacuum line or compressed gas line.

The aperture in the apertured platen may fit around the sample preparation means so that the sample surface is brought into contact with the sample preparation means when the platen is in the second position. Alternatively the sample preparation means may be movable between a recessed position, in which they are inaccessible to the user, and an operative position in which they project through the aperture. Movement between the recessed position and the operative position may be actuated by the same mechanism that actuates the operation of the sample preparation means.

In use, a sample may be placed against the platen, overlying the aperture, and the platen moved to the second position. The sample preparation means cut or abrade the sample surface so as to provide a clean surface. The platen is then moved into the first position and a reflectance spectrum may be obtained from the fresh surface. One or more calibration spectra may be taken before or after the sample spectrum, and these may be stored in a computer memory. The process may be repeated for other samples, and the whole process may be automated if desired.

If the samples of materials to be identified all have an acceptable surface finish, there may be no need to associate sample preparation equipment with the relay. The relay may include a tapered nose extending from a wall of the relay, with the point at which the sample surface is to be placed being at the tip of the nose. The use of a tapered nose enables inside surfaces of samples (which are often the cleanest surfaces or the surfaces without surface finishes) to be placed over the tip of the nose.

To prevent contamination entering the relay, the tip of the nose will be covered by a cap, when no reading is being taken. The cap preferably has an internal reflecting surface, so that when the spectrometer is initially switched on, a 'background' reading can be taken with the cap on. This can be repeated whenever recalibration is required.

Alternatively, the tip of the nose may be provided with a shutter which acts to close off the opening when there is no sample in position. The shutter may be spring biased to close the opening, and a spring loaded push-button with a cam surface may be used to displace the shutter when a sample presses on the push-button. In a preferred embodiment the surface of the shutter which faces inwardly towards the spectrometer has a coating which is usable to take a background reading for calibration of the spectrometer and/or the relay. The inward shutter surface may, for example, be silvered, and the mechanical movement of the shutter may be used to trigger the next activity via an electrical switch.

Exclusion of dust and other contaminants from the spectrometer may also be achieved by providing the relay with a cover which, when the relay is mounted in the spectrometer, forms a seal with the surfaces of the spectrometer to reduce or eliminate the passage of air.

The invention will now be further described, by way of example, with reference to the following drawings in which:
Figure 1 is a schematic view of a spectrometer fitted with an optical relay in accordance with the invention;
Figure 2 is a plan view of the internal components of an optical relay in accordance with the invention;
Figures 3a and 3b are external views of the relay of Figure 1 with a platen in a first and a second position;
Figure 4 is a view of a shutter mechanism for the relay of Figures 1 to 3;
Figure 5 is a part sectional view of part of the shutter mechanism of Figure 4;
Figure 6 is a schematic view of a second embodiment of optical relay in accordance with the invention;
Figure 7 shows light paths within the relay of Figure 6;
Figure 7a is a detail of part of Figure 7; and
Figures 8 and 9 are schematic views of a third embodiment of optical relay in accordance with the invention, in two alternative positions.

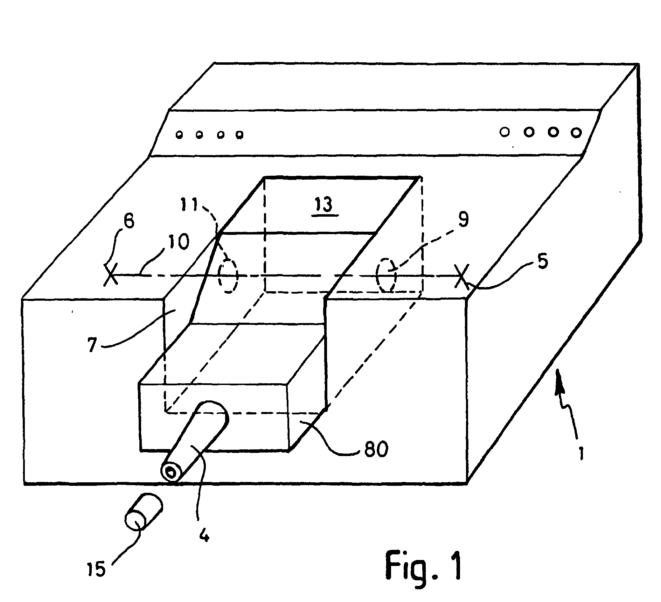

Figure 1 shows a standard spectrometer 1. An infrared light source 5 and a light detector 6 are mounted in the spectrometer, on opposite sides of a sample bay 7 in which an optical relay 80 is fitted. The relay 8 is removably fitted in the bay 7, and lines up with an infrared beam 10 transmitted through windows 9 and 11. The relay has a cover 13 and a conical projection or nose 4 against which a sample is to be placed. A cap 15 is provided for the end of this projection.

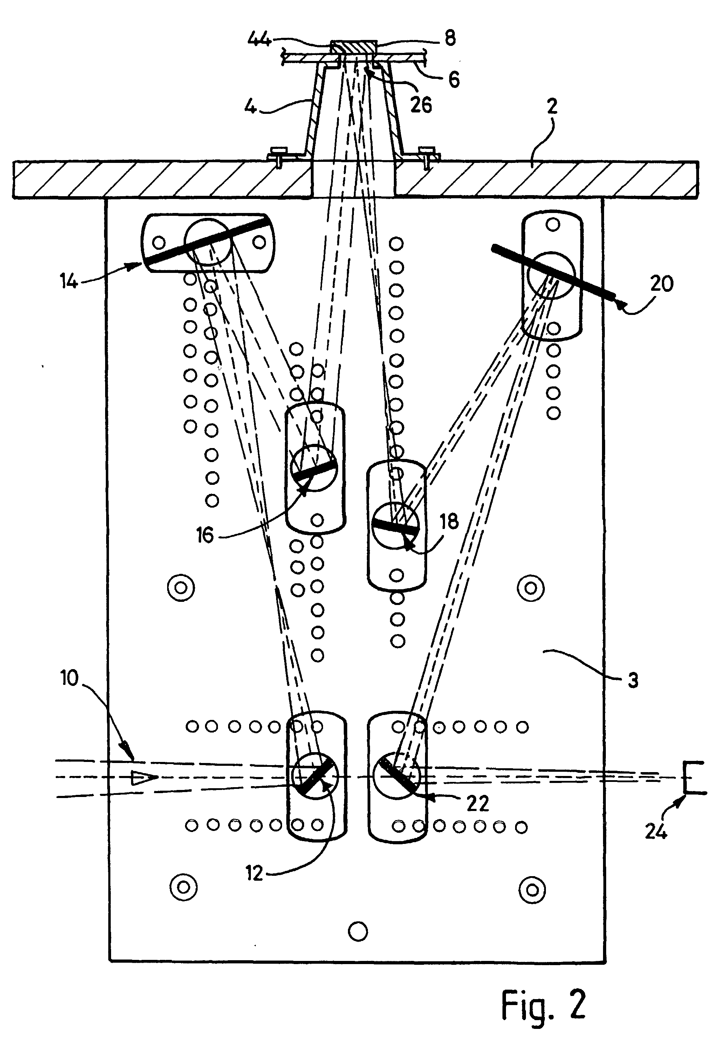

Figure 2 shows the optical arrangement mounted on a baseplate 3 which may be slideably inserted into and removed from the spectrometer. The relay has mirrors 12, 14, 16, 18, 20, 22 which are mounted on the baseplate 3. In Figure 2, the mirrors are shown as being adjustable in position, but once the relay has been correctly set up, no further adjustment should be necessary, and in production versions of this relay, there may be no adjustment facilities. The mirrors, some of which are concave, are front-silvered, or may be metal mirrors, to give high optical reflectivity. The relay has a housing 2 which includes a conical projection 4 with an aperture 26 which is normally closed by a shutter 50. The housing has a platen 6 with an aperture 44, and, in one embodiment, location of the platen 6 over the conical projection 4 causes the shutter 50 to open to allow access to a sample 8 located over the platen 6.

The position of the sample does not have to be exactly on the platen 6; a satisfactory specular reflectance spectrum can still be obtained, even if the sample is up to 40 mm away from its optimum position.

When no relay is mounted in the spectrometer an infrared beam will follow a beam path 10 which is directed at a beam detector 24.

The optical relay includes mirrors 12, 14, 16 which divert the beam from the beam path 10 to the surface of the sample 8. Specularly reflected light from the surface of the sample 8 is directed by mirrors 18, 20, 22 to the detector 24. The incident light path and the reflected light path are not symmetrical. In particular the mirrors 16 and 18 are not symmetrical.

The angle between the incident and reflected beams is about 12 degrees, and the beams meet at the outer surface of the platen 6. As a result of this narrow angle, the reflected beam will still be directed by the mirrors 18, 20, 22 to the detector 24 if the gap between the housing 2 and the surface of the sample 8 is changed a little, for example if the sample 8 had a curved rather than a planar surface. The relay is therefore relatively insensitive to sample shape or configuration, and the position of the sample relative to the optical elements of the relay can change through ± 20mm from a central point without adversely affecting the spectrum received at the detector 24.

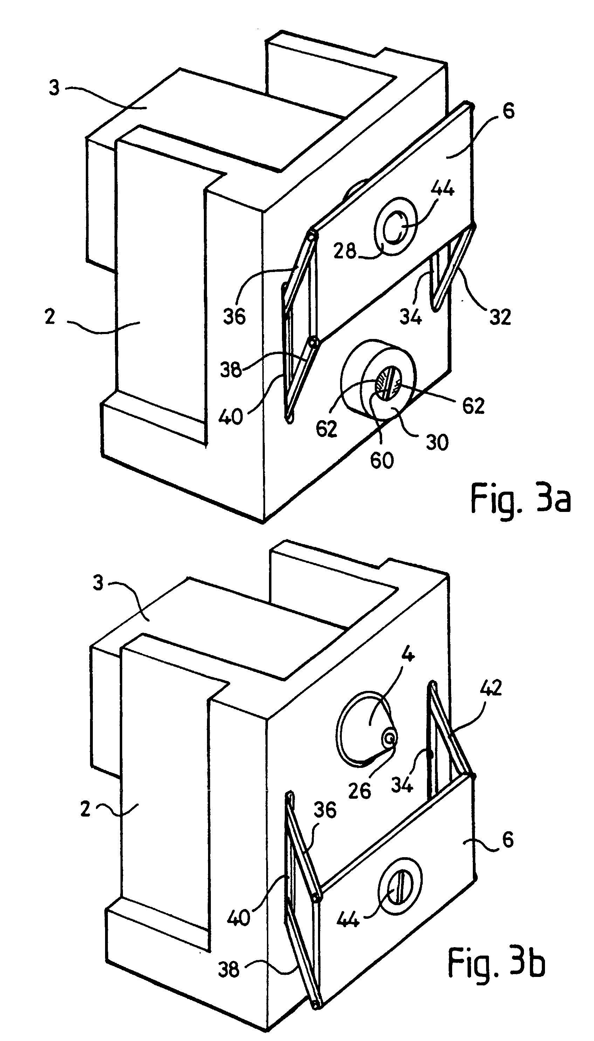

As shown in Figures 3, the platen 6 has a sample landing surface 28, and an aperture 44. The platen is mounted on the housing 2 of the relay by means of legs 32, 36, 38, 42 which are extend through slots 34, 40. The relay has sample preparation means comprising a cutter housing 30 in which is rotatably mounted a cutter 60 on a shaft for cutting the sample 8. Brushes 62 are mounted on the same shaft as the cutter 60, and function to sweep swarf away from the sample. The cutter housing 30 may be connected to a vacuum line to remove the swarf as it is formed. When the platen 6 is in the first position shown in Figure 3a, the cutter 60 does not rotate. Movement of the platen 6 into the second position shown in Figure 3b, wherein the cutter 60 protrudes slightly through the aperture 44, causes the cutter 60 to rotate and to cut the surface of a sample 8 held over the aperture 44.

In use, the relay is fitted into the spectrometer so that part of the relay lies in the beam path 10, with the housing 2 abutting the housing of the spectrometer. The edges of the baseplate 3 may optionally be provided with rubber strips to help ensure a good seal with the walls of the spectrometer. A sample 8 of plastics material is held against the aperture 44 of the platen 6 when the platen 6 is in the first position. The platen 6 is then swung down into the second position, causing the cutter 60 to rotate and cut the sample 8 to reveal a clean surface. The platen 6 is then swung back into the first position, with the sample 8 in place. This causes the cutter 60 to stop rotating, and opens a shutter 50 in the conical section 4 of the housing 2. This movement may also trigger the spectrometer to take a reading of the infrared spectrum of the sample surface. Alternatively the user could trigger the reading manually.

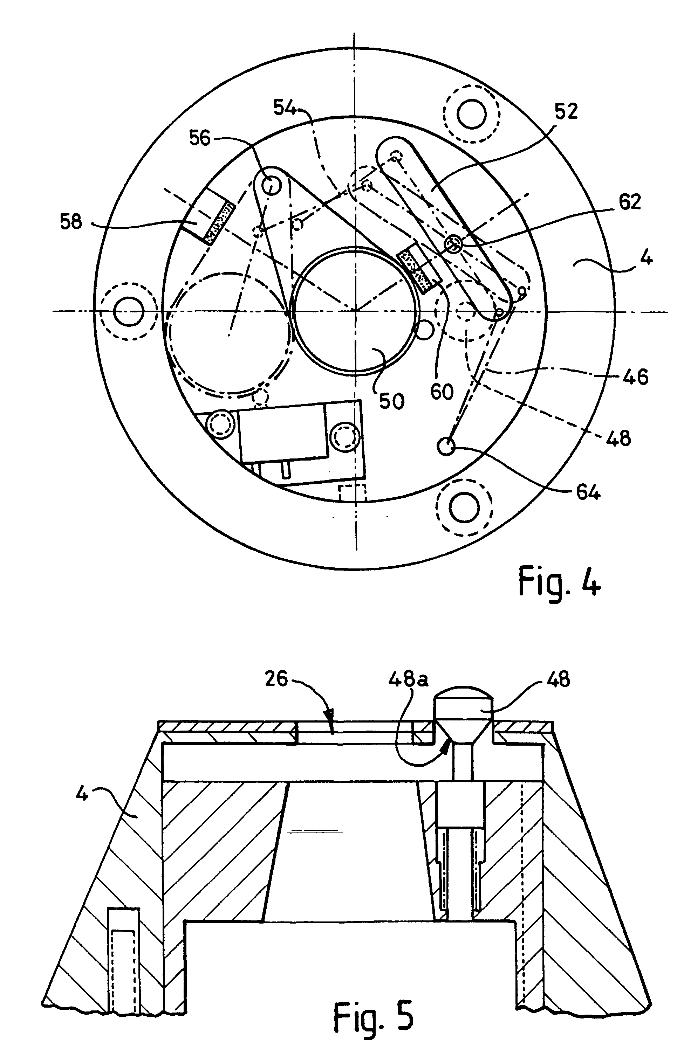

One possible shutter mechanism 50 is shown in more detail in Figure 4. The shutter 50 is urged anticlockwise as viewed, by a coil spring 56. A stop 60 limits the anticlockwise movement of the shutter 50 so that the shutter 50 normally overlies the aperture 26 of the conical projection 4. A lever 52 is connected to a fixed point 64 by a first rod 46 at one end, and to the shutter 50 by a second rod 54 at its other end. The lever 52 has a pivot 62 which is located between the points at which the rods 46, 54 are connected to the lever. A push-button 48 is axially movable in a wall of the conical projection 4, as best shown in Figure 5. The push-button 48 has a lower cam surface 48a which bears down on the lever 52. Pushing the push-button 48 causes the lever 52 to turn about the pivot 62, and the rod 54 pushes the shutter 50 towards the position shown in broken lines, thereby opening the aperture 26. A second stop 58 limits the clockwise movement of the shutter 50. When the push-button 48 is released, the action of the coil spring 56 reverses the above process. The push-button 48 may optionally be independently spring-loaded to facilitate the return action. In use, the platen 6 bears down and presses on the push-button 48 when the platen 6 is correctly located in the first position shown in Figure 3a. The shutter 50 therefore only opens when a spectroscopic measurement is to be taken, reducing the chance of dust or other atmospheric contaminants entering the spectrometer via the aperture 26.

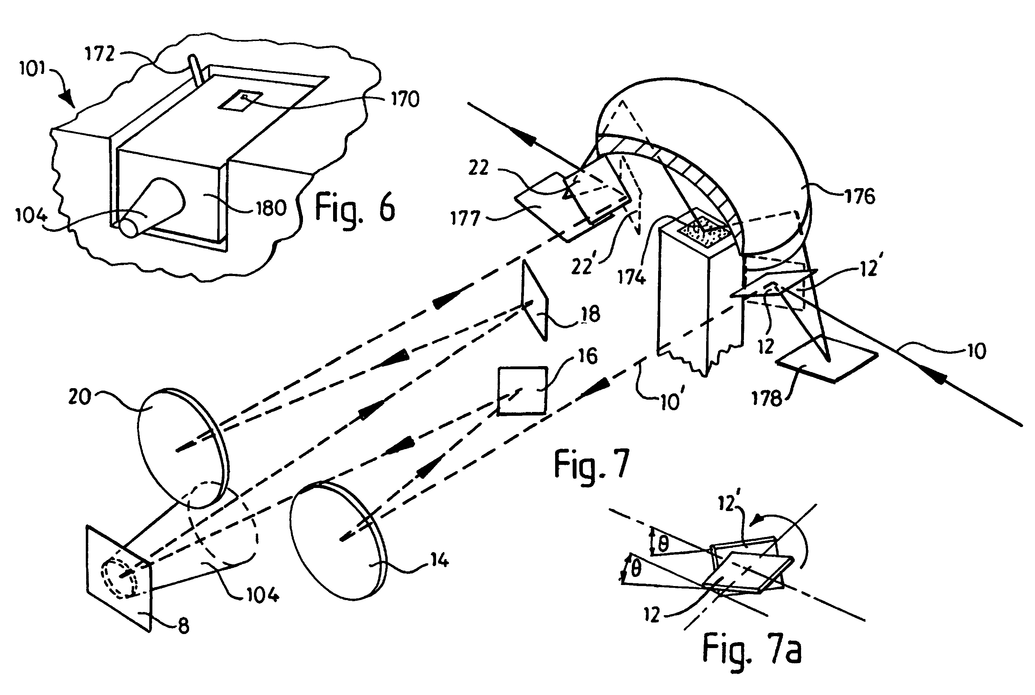

Figures 6 and 7 show a dual-function optical relay 180, which has the facility to take both specular and diffuse reflectance spectra. In respect of specular reflectance spectra, a solid sample will be placed at the end of a nose cone 104, in a manner as already described. To take a diffuse reflectance spectrum, a prepared sample will be introduced to the relay through an aperture 170. A lever 172 is used to switch the relay from specular to diffuse and vice versa. The lever 172 will move the orientation of mirrors within the cell to redirect the infrared beam.

Figure 7 shows more detail of how this can be done. This Figure corresponds to Figure 2, and the mirrors 14,16,18 and 20 will be unchanged form that earlier embodiment. The mirrors 12 and 22 will however be movably mounted. In addition to these mirrors, the diffuse reflectance side of the relay has a sample support 174, a spherical mirror 176 and input and output mirrors 177 and 178. The mirrors 12 and 22 can be moved between a first position where they are part of the specular reflectance spectrum circuit and a second position where they are part of the diffuse reflectance circuit.

Figure 7 shows in bold lines 10, the radiation path used for diffuse reflectance. The incoming radiation is reflected from mirror 12 (which is now in the position shown in bold lines) to mirror 178, to mirror 176, to the sample at 174, back to mirror 176, to mirror 177, to mirror 22 and from there to the spectrometer detector. This produces a diffuse reflectance spectrum, in a known way, and the set up is similar to that used for standard Diffuse Reflectance cells. The sample can be. prepared on a piece of silicon carbide paper. It may be possible for the sample to be attached to a rod or other movable support which is then introduced from outside into the relay, to reach a fixed position (it is important for diffuse reflectance readings that the sample be accurately positioned).

To adjust the relay for a specular reflectance reading, the mirrors 12 and 22 are moved into the positions indicated by dotted lines at 12' and 22'. The incoming radiation then is reflected along the path shown by dotted lines 10'.

The movement of the mirrors 12 and 22 can be a simple swivel movement about a single axis, through an angle of about 90°. This is shown in Figure 7a.

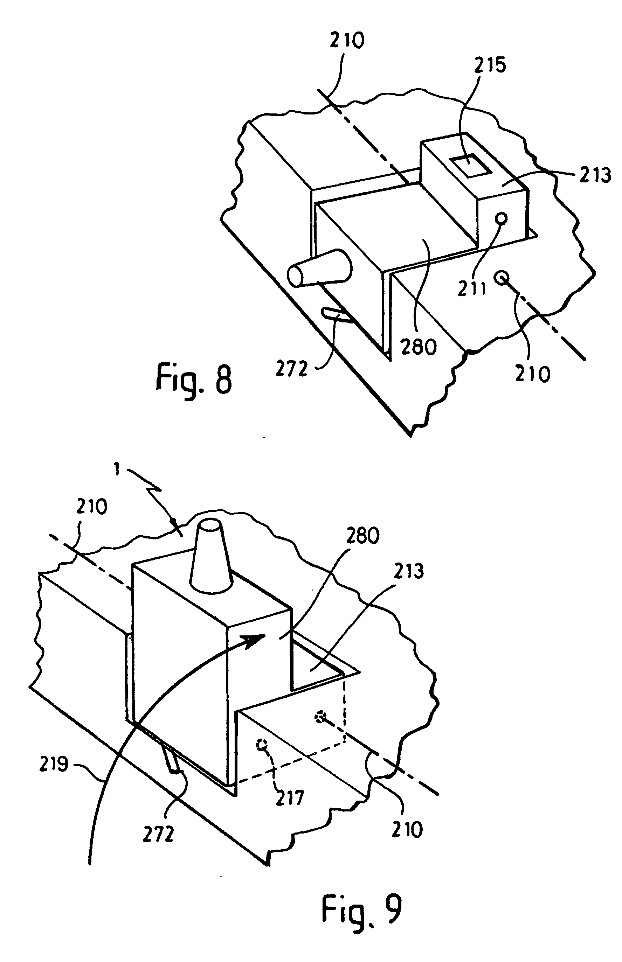

Figures 8 and 9 show another way in which one relay can be used for both diffuse and specular measurements. In this case, the relay 280 is bodily movable about a horizontal axis between the positions shown in the two Figures. A lever 272 is provided to initiate this movement and to ensure the correct final positioning of the housing. In the Figure 8 position, the relay is set for specular reflectance measurements, and the arrangement will be as described with reference to the earlier Figures. In Figure 9, the relay has been swung into a position where a radiation entry window 211 of a diffuse cell housing 213 is aligned with the infrared beam path 210 through the spectrometer. The housing 213 has a sample receiving aperture at 215. The housing swings on a pivot axis at 217, as indicated by an arrow 219.

The infra red light will pass through either the specular reflectance circuit (in the position of Figure 8), or through the diffuse reflectance circuit (in the position of Figure 9) before passing to the detector of the spectrometer.

The invention therefore provides a convenient optical relay for use with a standard spectrometer for measuring the spectra of plastics articles, whatever the shape of the article and with a minimum of pre-treatment.

## Claims

1. An optical relay (80) for use between the source (5) and the detector (6) of a spectrometer (1), the relay including one or more reflecting surfaces (12,14,16) for directing a beam of infrared radiation from the source and through a window (26) to a point outside the relay at which a sample surface can be located, and one or more further reflective surfaces (18,20,22) for receiving specular reflection from the sample surface and for directing the specular reflection to the detector (6), **characterised in that** in use the angle between the beam which is incident on the sample surface, and the beam reflected from the sample surface, is substantially 12 degrees or less.

2. A relay (80) as claimed in Claim 1 wherein the reflecting surfaces (12, 14, 16, 18, 20, 22) are mounted on a baseplate (3) which is slideably mountable in a spectrometer.

3. A relay (80) as claimed in any preceding claim, including sample preparation means for cutting or abrading a sample surface, and an apertured platen (6) adapted to be moved between a first position in which the aperture (44) is in register with the window (6) of the relay (80), and a second position in which the aperture (44) is in register with the sample preparation means.

4. A relay (80) as claimed in Claim 3, provided with means responsive to the location of the platen in the second position to actuate the sample preparation means, and means responsive to the location of the platen away from the second position to deactuate the sample preparation means, whereby placing the sample surface against the aperture (44) when the platen is in the second position causes the sample preparation means to cut or abrade the sample surface.

5. A relay (80) as claimed in Claim 3 or Claim 4, wherein the sample preparation means comprises at least one rotatable cutter blade (60).

6. A relay (80) as claimed in any one of Claims 3 to 5, wherein the sample preparation means has associated with it cleaning means (62) for removing swarf or other debris resulting from cutting or abrasion of the sample surface.

7. A relay (80) as claimed in any preceding claim, further including a shutter (50) associated with the relay window and adapted to open the window when a sample is in position at the window, and to close the window when no sample is in position.

8. A relay (80) as claimed in Claim 7, wherein the shutter (50) has a coating on an inside surface thereof which is usable for calibration of the spectrometer.

9. A relay (80) as claimed in any preceding claim, wherein the path of the infrared radiation incident on the sample is not symmetrical with the path of the reflected radiation.

10. A relay (80) as claimed in any preceding claim, including a second set (12,22,176) of reflecting surfaces for directing a beam of infrared radiation from the source (5), to a sample location, from the sample as diffuse reflection and to the detector (6), the first (12,14,16,18,20,22) and second (12,22,176) sets of reflecting surfaces being alternately positionable between the source (5) and the detector (6) of a spectrometer.

11. An optical relay as claimed in Claim 10, wherein the two sets (12,14,16,18,20,22; 12,22,176) of reflecting surfaces have one pair of reflecting surfaces (12,22) in common, the common set (12,22) of reflecting surfaces being movable between a first position where they direct radiation into and from the first set of surfaces and a second position where they direct radiation into and from the second set of surfaces.

## Patentansprüche

1. Ein optisches Relais (80) zur Verwendung zwischen der Quelle (5) und dem Detektor (6) eines Spektrometers, wobei das Relais eine oder mehrere reflektierende Oberflächen (12, 14, 16) einschließt, um einen Strahl aus Infrarotstrahlung von der Quelle und durch ein Fenster (26) hindurch zu einem Punkt außerhalb des Relais zu lenken, an welchem eine Probenfläche angeordnet werden kann; und eine oder mehrere weitere, reflektierende Oberflächen (18, 20, 22), um von der Probenoberfläche eine gerichtete Reflexion zu empfangen und die gerichtete Reflexion zu dem Detektor (6) zu lenken; **dadurch gekennzeichnet daß** im Gebrauch der Winkel zwischen dem auf der Probenoberfläche einfallenden Strahl und dem von der Probenoberfläche reflektierten Strahl im wesentlichen 12 Grad oder weniger beträgt.

2. Ein Relais (80) nach Anspruch 1, in dem die reflektierenden Oberflächen (12, 14, 16, 18, 20, 22) auf einer Grundplatte (3) montiert sind, welche in einem Spektrometer gleitfähig montierbar ist.

3. Ein Relais (80) nach einem der vorstehenden Ansprüche, das Probenvorbereitungs-Vorrichtungen zum Schneiden oder Abreiben einer Probenoberfläche einschließt; und eine durchbrochene Platte (6), die angepaßt ist um zwischen einer ersten Stellung - in welcher sich die Öffnung (44) in Register mit dem Fenster (6) des Relais (80) befindet - und einer zweiten Stellung - in welcher die Öffnung (44) sich in Register mit der Probenvorbereitungs-Vorrichtung befindet - bewegt zu werden.

4. Ein Relais (80) nach Anspruch 3, das mit einer Vorrichtung ausgestattet ist die auf die Positionierung der Platte in der zweiten Stellung anspricht, um die Probenvorbereitungs-Vorrichtung zu betätigen; und einer Vorrichtung die auf die Positionierung der Platte von dieser zweiten Stellung weg anspricht, um die Probenvorbereitungs-Vorrichtung zu deaktivieren; wobei das Plazieren der Probenoberfläche gegen die Öffnung (44) bewirkt daß die Probenvorbereitungs-Vorrichtung die Probenoberfläche schneidet oder abreibt.

5. Ein Relais (80) nach Anspruch 3 oder Anspruch 4, in dem diese Probenvorbereitungs-Vorrichtung mindestens eine drehbare Schneiderklinge (60) umfaßt.

6. Ein Relais (80) nach einem der Ansprüche 3 bis 5, in dem die Probenvorbereitungs-Vorrichtung eine mit ihr in Verbindung stehende Säuberungsvorrichtung (62) einschließt, um aus dem Schneiden oder Abreiben der Probenoberfläche resultierenden Schleifabfall oder andere Rückstände zu entfernen.

7. Ein Relais (80) nach einem der vorstehende Ansprüche, das weiterhin einen Verschluß (50) einschließt, der mit dem Relaisfenster in Verbindung steht und angepaßt ist um das Fenster zu öffnen, wenn sich eine Probe an dem Fenster in Position befindet; und um es zu schließen, wenn sich keine Probe in Position befindet.

8. Ein Relais (80) nach Anspruch 7, in dem der Verschluß (50) auf einer inneren Oberfläche hiervon eine Beschichtung aufweist, welche zur Kalibrierung des Spektrometers verwendbar ist.

9. Ein Relais (80) nach einem der vorstehenden Ansprüche, in dem der Gang der auf die Probe einfallenden Infrarotstrahlung nicht mit dem Gang der reflektierten Strahlung symmetrisch ist.

10. Ein Relais (80) nach einem der vorstehenden Ansprüche, das einen zweiten Satz (12, 22, 176) von reflektierenden Oberflächen einschließt, um den Strahl der Infrarotstrahlung von der Quelle (5) zu einem Probenort, als diffuse Reflexion von der Probe weg und zum Detektor (6) zu lenken, wobei die ersten (12, 14, 16, 18, 20, 22) und zweiten (12, 22, 176) Sätze von reflektierenden Oberflächen abwechselnd zwischen der Quelle (5) und dem Detektor (6) des Spektrometers zu positionieren sind.

11. Ein optisches Relais nach Anspruch 10, in dem die zwei Sätze (12, 14, 16, 18, 20, 22; 12, 22, 176) von reflektierenden Oberflächen ein Paar reflektierender Oberflächen (12, 22) gemein haben; wobei der gemeinsame Satz (12, 22) der reflektierenden Oberflächen zwischen einer ersten Stellung - in der sie Strahlung in den ersten Satz von Oberflächen hinein und aus ihm heraus lenken - und einer zweiten Stellung - in der sie Strahlung in den zweiten Satz von Oberflächen hinein und aus ihm heraus lenken - beweglich ist.

## Revendications

1. Relais optique (80) destiné à être utilisé entre la source (5) et le détecteur (6) d'un spectromètre (1), le relais comprenant une ou plusieurs surfaces de réflexion (12, 14, 16) destinées à diriger un faisceau de rayonnement infrarouge provenant de la source et au travers d'une fenêtre (26) en un point à l'extérieur du relais auquel une surface d'échantillon peut être placée, et une ou plusieurs autres surfaces de réflexion (18, 20, 22) destinées à recevoir une réflexion spéculaire provenant de la surface de l'échantillon et destinées à orienter la réflexion spéculaire vers le détecteur (6) **caractérisé en ce qu'**en utilisation, l'angle entre le faisceau qui est incident sur la surface de l'échantillon, et le faisceau qui est réfléchi à partir de la surface de l'échantillon, est sensiblement de 12 degrés ou moins.

2. Relais (80) selon la revendication 1, dans lequel les surfaces de réflexion (12, 14, 16, 18, 20, 22) sont montées sur une plaque de base (3) qui peut être montée de façon coulissante dans un spectromètre.

3. Relais (80) selon l'une quelconque des revendications précédentes, comprenant un moyen de préparation d'échantillon destiné à découper ou à éroder une surface d'un échantillon, et une plaque munie d'une ouverture (6) conçue pour être déplacée entre une première position à laquelle l'ouverture (44) est en alignement avec la fenêtre (6) du relais (80) et une seconde position à laquelle l'ouverture (44) est en alignement avec le moyen de préparation d'échantillon.

4. Relais (80) selon la revendication 3, muni d'un moyen sensible à l'emplacement de la plaque à la seconde position pour actionner le moyen de préparation d'échantillon, et un moyen sensible à l'emplacement de la plaque à l'écart de la seconde position pour désactiver le moyen de préparation d'échantillon, d'où il résulte que le positionnement de la surface d'échantillon contre l'ouverture (44) lorsque la plaque est à la seconde position, amène le moyen de préparation d'échantillon à découper ou à éroder la surface de l'échantillon.

5. Relais (80) selon la revendication 3 ou la revendication 4, dans lequel le moyen de préparation d'échantillon comprend au moins une lame d'outil de coupe rotative (60).

6. Relais (80) selon l'une quelconque des revendications 3 à 5, dans lequel le moyen de préparation d'échantillon comporte, associé à celui-ci un moyen de nettoyage (62) destiné à retirer des copeaux ou autres débris résultants de la découpe ou de l'abrasion de la surface de l'échantillon.

7. Relais (80) selon l'une quelconque des revendications précédentes, comprenant en outre un obturateur (50) associé à la fenêtre du relais et conçu pour ouvrir la fenêtre lorsqu'un échantillon est en position au niveau de la fenêtre, et pour refermer la fenêtre lorsque aucun échantillon n'est en position.

8. Relais (80) selon la revendication 7, dans lequel l'obturateur (50) comporte un revêtement sur une surface intérieure de celui-ci qui est utilisable pour l'étalonnage du spectromètre.

9. Relais (80) selon l'une quelconque des revendications précédentes, dans lequel le trajet du rayonnement infrarouge incident sur l'échantillon n'est pas symétrique par rapport au trajet du rayonnement réfléchi.

10. Relais (80) selon l'une quelconque des revendications précédentes, comprenant un second ensemble (12, 22, 176) de surfaces de réflexion destiné à orienter un faisceau de rayonnement infrarouge provenant de la source (5) vers un emplacement d'échantillon, depuis l'échantillon sous forme d'une réflexion diffuse, et vers le détecteur (6), les premier (12, 14, 16, 18, 20, 22) et second (12, 22, 176) ensembles de surfaces de réflexion pouvant être positionnés en alternance entre la source (5) et le détecteur (6) d'un spectromètre.

11. Relais optique selon la revendication 10, dans lequel les deux ensembles (12, 14, 16, 18, 20, 22 ; 12, 22, 176) de surfaces de réflexion comportent une première paire de surfaces de réflexion (12, 22) en commun, l'ensemble commun (12, 22) de surfaces de réflexion étant mobile entre une première position où ils orientent le rayonnement dans le premier ensemble de surfaces et depuis celui-ci, et une seconde position où ils orientent le rayonnement dans le second ensemble de surfaces et depuis celui-ci.
